# EUROPÄISCHE PATENTANMELDUNG

(11) **EP 0 563 764 A1**
(43) Veröffentlichungstag der Anmeldung: **06.10.1993**
(21) Anmeldenummer: 93104804.5
(22) Anmeldetag: 24.03.1993
(51) Int. Cl.: H05B 39/04, H02M 5/293

(54) **Lichtregler für mit elektronischen Transformatoren versehene Niedervolt-Halogenlampen oder für Netzspannungs-Glühlampen**

(30) Priorität: 02.04.1992 CH 1072/92
(71) Anmelder: STARKSTROM-ELEKTRONIK AG, CH-8957 Spreitenbach (CH)
(72) Erfinder: Kamber,Fredy, CH-5422 Oberehrendingen (CH)
(74) Vertreter: Fillinger, Peter, Dr.

(57) **Zusammenfassung**

Der Lichtregler enthält eine einstellbare Phasenabschnitt-Steuerschaltung (7) mit einem Steuersignalausgang. Zwei MOSFET-Leistungstransistoren (1, 2) mit integrierter Inversdiode (3) sind gegensinnig in Reihe geschaltet. Hierbei sind ihre Source-Elektroden (S) miteinander verbunden, während ihre Drain-Elektroden (D) mit Anschlussklemmen (L, 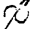 ) verbunden sind. An die eine Anschlussklemme (L) ist der Phasenleiter des Wechselstromnetzes anschliessbar, und an die andere Anschlussklemme ( 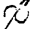 ) der zu speisende Verbraucher (4). Die Gate-Elektroden (G) der beiden Transistoren (1, 2) sind gemeinsam mit dem Steuersignalausgang der Phasenabschnitt-Steuerschaltung (7) verbunden.

Im Betrieb ist während jeder Halbwelle der Netzwechselspannung bei Vorliegen der Steuerspannung jeweils der eine Transistor (1, 2) leitend. Durch den anderen Transistor (2, 1) fliesst der Strom über dessen Inversdiode (3). Dadurch sind die Spannungsabfälle und damit die Verluste geringer als bei der Anordnung eines Transistors oder mehrerer paralleler Transistoren in der Diagonalen einer Gleichrichterbrücke.

## Beschreibung

Die vorliegende Erfindung betrifft einen Lichtregler für mit vorgeschalteten, an ein Wechselstromnetz anschliessbaren elektronischen Transformatoren versehene Niedervolt-Halogenlampen oder für Netzspannungs-Glühlampen gemäss dem Oberbegriff des Patentanspruchs 1.

Handelsübliche und in bestehende Beleuchtungsanlagen eingebaute Lichtregler dieser Art sind seinerzeit dazu entworfen worden, um Niedervolt-Halogenlampen zu steuern, welchen aus Raum- und Gewichtsgründen ein elektronischer Transformator statt eines üblichen, induktiven Transformators zur erforderlichen Herabsetzung der Netzwechselspannung vorgeschaltet ist. Hierfür sind die zuvor bekannten Lichtregler, die auf einer Phasenanschnitt-Steuerung des speisenden Netzwechselstroms beruhen, nicht verwendbar, da die elektronischen Transformatoren eingangsseitig kapazitiv sind, was wegen des beim Einschalten der Netzwechselspannung eintretenden Stromstosses nicht nur eine bestimmungsgemässe Funktion des Lichtreglers beeinträchtigt, sondern auch den Lichtregler und/oder den elektronischen Transformator beschädigen kann.

Bei einer somit naheliegenden Phasenabschnitt-Steuerung liegt bekanntlich das Problem der Verfügbarkeit eines kostengünstigen Halbleiter-Schalters vor, der unter Stromfluss abschaltbar ist. Da die Abschaltbarkeit bei kostengünstigen Halbleiter-Elementen vom Typ Thyristor und Triac nicht gewährleistet ist, sind derzeit Leistungstransistoren, insbesondere MOSFET-Transistoren, im Handel angeboten, die in der eingangs genannten Weise für Lichtregler der vorliegenden Art verwendet werden. Hierbei ist es bei den bekannten Lichtreglern üblich, den Leistungstransistor oder gegebenenfalls mehrere parallel geschaltete Leistungstransistoren in der Diagonalen einer Gleichrichterbrücke anzuordnen.

Nachteilig bei solchen bekannten Schaltungsanordnungen ist der Umstand, dass zufolge des Stromflusses durch den Leistungstransistor und jeweils zwei Dioden der Gleichrichterbrücke mehrfache Spannungsabfälle entstehen, die entsprechende Verluste und Wärme erzeugen.

Aufgabe der vorliegenden Erfindung ist, einen Lichtregler der eingangs genannten Art zu schaffen, bei welchem Energieverluste vermindert sind, derart, dass bei gleich grosser Wärmeabfuhr eine höhere Schaltleistung des Lichtreglers ermöglicht wird.

Zur Lösung dieser Aufgabe weist der erfindungsgemässe Lichtregler die im kennzeichnenden Teil des Patentanspruchs 1 angeführten Merkmale auf.

Beim erfindungsgemässen Lichtregler liegen nur die Verluste der Spannungsabfälle über den jeweils eingeschalteten MOSFET-Leistungstransistor und eine integrierte Inversdiode vor, so dass bei gleichen Kühlflächen bzw. bei gleichem Leistungstyp des Transistors eine um etwa die Hälfte grössere Schaltleistung ermöglicht wird.

Ein Ausführungsbeispiel des erfindungsgemässen Lichtreglers wird nachstehend anhand des beigefügten Schaltungsschemas erläutert.

Der Lichtregler enthält zwei MOSFET-Leistungstransistoren 1 und 2 handelsüblicher Art, die je eine Source-Elektrode S, eine Drain-Elektrode D und eine Gate- oder Steuerelektrode G aufweisen und die mit einer integrierten Inversdiode 3 versehen sind. Die Source-Elektroden S der beiden Transistoren 1, 2 sind miteinander verbunden. Die Drain-Elektrode D des Transistors 1 ist mit einer Anschlussklemme L verbunden, an welche der Phasenleiter des speisenden Wechselstromnetzes von 230 Volt anzuschliessen ist. Die Drain-Elektrode D des anderen Transistors 2 ist mit einer weiteren Anschlussklemme 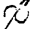 verbunden, an welche ein kapazitiver oder ohmscher Verbraucher 4 anzuschliessen ist, im vorliegenden Fall also die eine Eingangsklemme eines elektronischen Transformators einer Niedervolt-Halogenlampe oder der eine Kontaktanschluss einer Glühlampe, wobei bis zur Belastungsgrenze des vorliegenden Lichtreglers mehrere elektronische Transformatoren bzw. Glühlampen an die Klemme 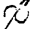 angeschlossen werden können. Die anderen Eingangsklemmen bzw. Kontaktanschlüsse der genannten Verbraucher 4 sind mit einer Anschlussklemme N zu verbinden, an welche auch der Null-Leiter des Wechselstromnetzes anzuschliessen ist. Schliesslich ist ein angedeuteter Kühlkörper 5 mit einer Erdungsklemme 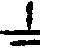 verbunden.

Die beiden miteinander verbundenen Source-Elektroden S, die beiden getrennten Drain-Elektroden D, die beiden miteinander über je einen Schutzwiderstand 6 verbundenen Gate-Elektroden der Transistoren 1, 2 sowie die Null-Leiterklemme N sind an ein Steuergerät 7 angeschlossen. Dieses enthält zwei über einen angedeuteten Optokoppler 8 miteinander in Verbindung stehende Steuerschaltungsteile 9, 10.

Der Schaltungsteil 9 umfasst eine an sich bekannte und hier nicht näher beschriebene Schaltungsanordnung zur Erzeugung eines Signals mit Beginn jeder Halbwelle des Netzwechselstroms, das heisst beim Nulldurchgang der Netzwechselspannung, wobei die zeitliche Länge des Signals während der betreffenden Halbwelle mittels eines äusseren Potentiometers 11 einstellbar ist. Zum Festlegen der Halbwellen und auch zur Erzeugung einer Speise-Gleichspannung wird die Netzwechselspannung dem Schaltungsteil 9 über einen nicht dargestellten Transformator zugeführt. Das erzeugte Signal wird über den Optokoppler 8 an den Schaltungsteil 10 übertragen.

Der Schaltungsteil 10 umfasst eine konventionelle Schaltungsanordnung 12 zur Aufbereitung des vom Optokoppler 8 übertragenen Signals zwecks dessen Zuleitung an die Gate-Elektroden G der Transistoren 1 und 2. Hierfür ist eine Gleichspannungsspeisung erforderlich, die im vorliegenden Fall mittels einer zwischen den Null-Leiter des Wechselstromnetzes und die miteinander verbundenen Source-Elektroden S der beiden Transistoren 1, 2 geschalteten Gleichrichter-, Glättungs- und Stabilisieranordnung verwirklicht ist und die einen Gleichrichter 13, einen Reihenwiderstand 14, einen Kondensator 15 und eine Zenerdiode 16 umfasst. Die mit den Source-Elektroden S verbundene Leitung bildet im Schaltungsteil 10 den Null-Leiter der Gleichspannungsspeisung.

Wie ersichtlich sind auch die beiden Drain-Elektroden D an die Schaltungsanordnung 12 angeschlossen. In der Schaltungsanordnung 12 wird in an sich bekannter Weise überprüft, ob ein Kurzschluss im Verbraucher 4, das heisst zwischen den Klemmen 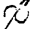 und N vorliegt, um gegebenenfalls eine elektronische Schnellabschaltung durch eine Sperrung des vom Optokoppler 8 übertragenen Signals auszulösen.

Schliesslich sind die beiden Drain-Elektroden über einen Kondensator 17 miteinander verbunden, der eine Unterdrückung von Störsignalen bewirkt.

Im Betrieb des dargestellten Lichtreglers ist während des Vorliegens des vom Optokoppler 8 übertragenen Steuersignals in der positiven Halbwelle der Netzwechselspannung der Transistor 1 leitend, während der Transistor 2 gesperrt ist, da seine Source-Elektrode S das Nullpotential der Steueranordnung 12 bildet. Somit fliesst der Strom von der Netzklemme L über den leitenden Transistor 1 und die integrierte Diode 3 des Transistors 2 zum Verbraucher 4. In der negativen Halbwelle der Netzwechselspannung liegen die Verhältnisse umgekehrt: Der Strom fliesst über die im Transistor 1 integrierte Diode 3 und über den jetzt leitenden Transistor 2. Sobald während jeder Halbwelle das vom Optokoppler übertragene Steuersignal verschwindet, wird der jeweils leitende Transistor 1 bzw. 2 gesperrt.

Beim vorliegenden Lichtregler sind die wärmeerzeugenden Verluste gering und werden im wesentlichen durch den Spannungsabfall im jeweils leitenden Transistor 1 bzw. 2 und durch den Spannungsabfall an der integrierten Diode 3 des anderen Transistors 2 bzw. 1 verursacht. Diese Spannungsabfälle sind zusammen ungefähr 2,4 Volt, so dass bei voller Aussteuerung und einem Verbraucherstrom von beispielsweise 5 Ampere Verluste in der Grössenordnung von 12 Watt entstehen. Hierzu kommen noch die Verluste des Steuergeräts 7, die aber wesentlich niedriger gehalten werden können. Somit ist es möglich, gegenüber herkömmlichen Lichtreglern ohne Gerätevergrösserung eine um etwa die Hälfte grössere Leistung von beispielsweise 1200 Watt abzugeben.

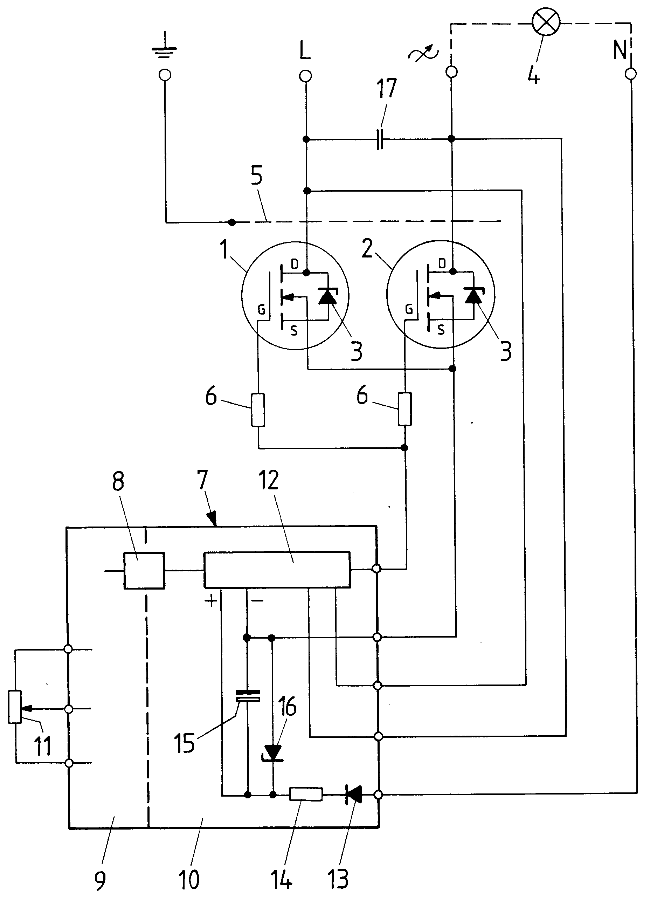

## Patentansprüche

1. Lichtregler für mit vorgeschalteten, an ein Wechselstromnetz anschliessbaren elektronischen Transformatoren versehene Niedervolt-Halogenlampen oder für Netzspannungs-Glühlampen (4), mit mindestens einem in den Speise-Netzstromkreis des elektronischen Transformators bzw. der Glühlampen (4) schaltbaren Leistungstransistor (1,2), dessen Steuerelektrode (G) an eine einstellbare Phasenabschnitt-Steuerschaltung (7) angeschlossen ist, um den Leistungstransistor (1, 2) in jeder Halbwelle der Netzwechselspannung jeweils bei einem ersten Nullduchgang der Netzwechselspannung einzuschalten und in einem wählbaren Zeitpunkt vor dem zweiten Nulldurchgang wieder auszuschalten, dadurch gekennzeichnet, dass zwei MOSFET-Leistungstransistoren (1, 2) mit integrierter Inversdiode (3) in der Weise gegensinnig in Reihe geschaltet sind, dass ihre Source-Elektroden (S) miteinander verbunden sind und ihre Drain-Elektroden (D) mit Anschlussklemmen (L, 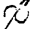 ) verbunden sind, die zur reihenmässigen Anordnung im Speise-Netzstromkreis der elektronischen Transformatoren bzw. der Glühlampen (4) bestimmt sind.

2. Lichtregler nach Anspruch 1, dadurch gekennzeichnet, dass die Gate-Elektroden (G) der beiden MOSFET-Leistungstransistoren (1, 2) mit dem gleichen Steuerausgang der phasenabschnitt-Steuerschaltung (7) in Verbindung stehen.

3. Lichtregler nach Anspruch 1 oder 2, dadurch gekennzeichnet, dass die Source-Elektroden (S) der beiden MOSFET-Leistungstransistoren (1, 2) mit einem internen Null-Leiter der Phasenabschnitt-Steuerschaltung (7) verbunden sind.

4. Lichtregler nach Anspruch 3, dadurch gekennzeichnet, dass zwischen dem Null-Leiter (N) des Wechselstromnetzes und dem Null-Leiter der phasenabschnitt-Steuerschaltung (7) eine Gleichrichteranordnung (13, 14, 15, 16) zur Erzeugung einer Speisespannung für mindestens einen Teil der Phasenabschnitt-Steuerschaltung (7) angeordnet ist.

5. Lichtregler nach einem der Ansprüche 1 bis 4, dadurch gekennzeichnet, dass die Drain-Elektroden (D) der beiden MOSFET-Leistungstransistoren (1, 2) mit einer Abschaltanordnung der Phasenabschnitt-Steuerschaltung (7) zwecks Unterdrückung der Steuerung der Transistoren (1, 2) bei einem Last-Kurzschluss in Verbindung stehen.

6. Lichtregler nach einem der Ansprüche 1 bis 5, dadurch gekennzeichnet, dass die Drain-Elektroden (D) der beiden MOSFET-Leistungstransistoren (1, 2) über einen Kondensator (17) zur Unterdrückung von Störsignalen miteinander verbunden sind.
